(19) Europäisches Patentamt / European Patent Office / Office européen des brevets

(11) **EP 3 855 926 B1**

(12) **EUROPEAN PATENT SPECIFICATION**

(45) Date of publication and mention
of the grant of the patent:
**07.06.2023 Bulletin 2023/23**

(21) Application number: **19780145.9**

(22) Date of filing: **26.09.2019**

(51) International Patent Classification (IPC):
***A22B 5/00*** *(2006.01)*

(52) Cooperative Patent Classification (CPC):
**A22B 5/007**

(86) International application number:
**PCT/DK2019/050287**

(87) International publication number:
**WO 2020/064075 (02.04.2020 Gazette 2020/14)**

(54) **INSPECTION OF POULTRY**

GEFLÜGELINSPEKTION

INSPECTION DE VOLAILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2018 DK PA201870637**

(43) Date of publication of application:
**04.08.2021 Bulletin 2021/31**

(73) Proprietor: **IHFood A/S
2200 Copenhagen N (DK)**

(72) Inventors:
• **FAGERTUN, Jens
2200 København N (DK)**
• **JØRGENSEN, Anders
2200 København N (DK)**
• **DIILING-HANSEN, Jacob
2200 København N (DK)**
• **DUEHOLM, Jacob Velling
2200 København N (DK)**

(74) Representative: **Plougmann Vingtoft a/s
Strandvejen 70
2900 Hellerup (DK)**

(56) References cited:
**US-A1- 2007 111 648     US-A1- 2009 087 033
US-A1- 2016 069 743     US-B1- 6 587 575**

## Description

### Technical field of the invention

The present invention relates to a system and method for inspection of slaughtered poultry carcasses on a processing line. In particular, the present invention relates to a system and method for inspection of slaughtered poultry where abnormalities close to the rump and groin area of the poultry can be detected by processing image data of the rump and groin area of the poultry. The abnormalities of the slaughtered poultry detected may, for example, be symptoms from poultry having diseases such as ascites, dermatitis, eczema, and inflamed skin or the abnormalities may be remainings of bile- or faecal contamination close to the rump and groin area of the poultry.

### Background of the invention

Automatic inspection of poultry, such as chicken, is well known as shown in documents US6587575B1, US2007/111648A1, US2009/087033A1 and US2016/069743A1. For example, automatic inspection of poultry using imaging systems to determine size, weight and deviations of the poultry is well known. These systems are used in connection with weight estimation and in connection with the cutting process of the poultry to determine the position of the cutting tool. Identification of poultry acceptable for consumption from poultry not suitable for consumption is also known. However, in poultry processing lines known today, the identification of poultry acceptable for consumption is normally done by manual inspection and/or by inspection of the internal organs from the poultry. A few systems have been described for determine diseases of poultry by recording images of the poultry, but those systems is recording images of the breast of the poultry. Thus, the systems for automatic inspection of poultry known today are systems with imaging systems where images are recorded of the breast of the poultry.

However, with images recorded of the breast of the poultry, it is difficult to detect the presence of certain diseases such as ascites and skin inflammation of the poultry. The symptoms of ascites in poultry is bulging of the lower part of the abdominal region and a blue colouring in the groin area of the poultry. Ascites can therefore not be detected by known imaging systems for inspection of poultry and is therefore typically detected by manual inspection. In addition, it is difficult with existing imaging systems to detect other abnormalities of the poultry located around the rump and groin area of the poultry if images are recorded of the breast of the poultry. These abnormalities could be bleedings, ruptures, scratches or remainings of bile or faeces close to the rump and groin area of the poultry. Thus, with the existing systems for inspection of poultry, some poultry may after the automatic inspection be accepted even though they are not suitable for consumption.

Inspection of diseases of the poultry and contamination around the rump and groin area is today performed by manual inspection by an inspector.

Thus, the known systems and methods are either manual inspection or automatic inspection systems using imaging systems processing images recorded of the breast of the poultry. Manual inspection systems and existing automatic inspection systems for poultry inspection are found to have low efficiency and/or being time consuming. Systems and methods using image processing of images recorded of the breast of a poultry are also found to be less efficient, and such systems and methods will not detect all types of abnormalities and/or all degrees of abnormalities, especially the abnormalities found close to the rump and the groin area of the poultry.

Hence, an improved system and method of automatic inspection of the poultry for detection of abnormalities would be advantageous, and in particular, a more efficient and/or reliable method and system would be advantageous.

### Object of the invention

Hence, it is an object of the present invention to provide an improved system and method of automatic inspection of the poultry for detection of abnormalities of the poultry close to the rump and groin area of the poultry. In particular, it is an object of the invention to provide a more efficient and/or reliable method and system.

It is a further object of the present invention to provide an alternative to the prior art.

In particular, it may be seen as an object of the present invention to provide a system and method for inspection of slaughtered poultry that solves the above-mentioned problems of the prior art.

### Summary of the invention

Thus, the above-described object and several other objects are intended to be obtained in a first aspect of the invention by providing:
A system according to claim 1 for inspection of slaughtered poultry carcasses on a processing line, comprising:

 i) means for conveying (1) the poultry (2)
 ii) one or more image-recording device(s) (3) configured for recording at least one digital image of the poultry (2) in the form of image data, where

  - the one or more image-recording device(s) (3) is (are) placed in a position to record at least one digital image of the rump and groin area of the poultry,

 iii) an image data processor configured to

  - receive image data of the at least one digital image of the rump and groin area of the poultry (2)

- process the image data of the at least one digital image of the rump and groin area to detect abnormalities of the poultry close to the rump and groin area.

In a second aspect, the invention relates to a method according to claim 13 of detecting abnormalities close to the rump and groin area of slaughtered poultry carcasses on a processing line, the method comprises:

 i. conveying the poultry (2) by means for conveying (1)
 ii. recording at least one digital image of the poultry (2) in the form of image data by one or more image-recording device(s) (3), where

- the at least one digital image is recorded of the rump and groin area of the poultry (2) by the one or more image-recording device(s) (3)

 iii. process the image data of the at least one digital image of the rump and groin area to detect abnormalities close to the rump and groin area of the poultry (2).

Further embodiments and aspects of the invention are presented in the following as defined in the dependent claims.

## Brief description of the figures

The present invention and in particular the preferred embodiments thereof will now be described in more detail with reference to the accompanying figures. The figures show ways of implementing the present invention and are not to be construed as being limiting to other possible embodiments falling within the scope of the attached claim set.

 Figure 1 is a schematic illustration of an embodiment of the system according to the present invention where the image-recording device is placed in a position above the poultry and directed with an angle in relation to the horizontal line towards the poultry.

 Figure 2 is a schematic illustration of the same embodiment shown in figure 1, but seen from the top.

 Figure 3 is a schematic illustration of an embodiment of the system according to the present invention where the image-recording device is placed in a position above the poultry, and in a horizontal direction.

 Figure 4 is a schematic illustration of an embodiment of the system according to the present invention, where the image-recording device is placed in a position such that the height vertically of the poultry and the image-recording device is the same. Furthermore, the image-recording device is placed in a position where the image-recording device (3) is parallel to a horizontal line and facing towards the poultry, and the poultry is tilted towards the image-recording device.

## Detailed description of the invention

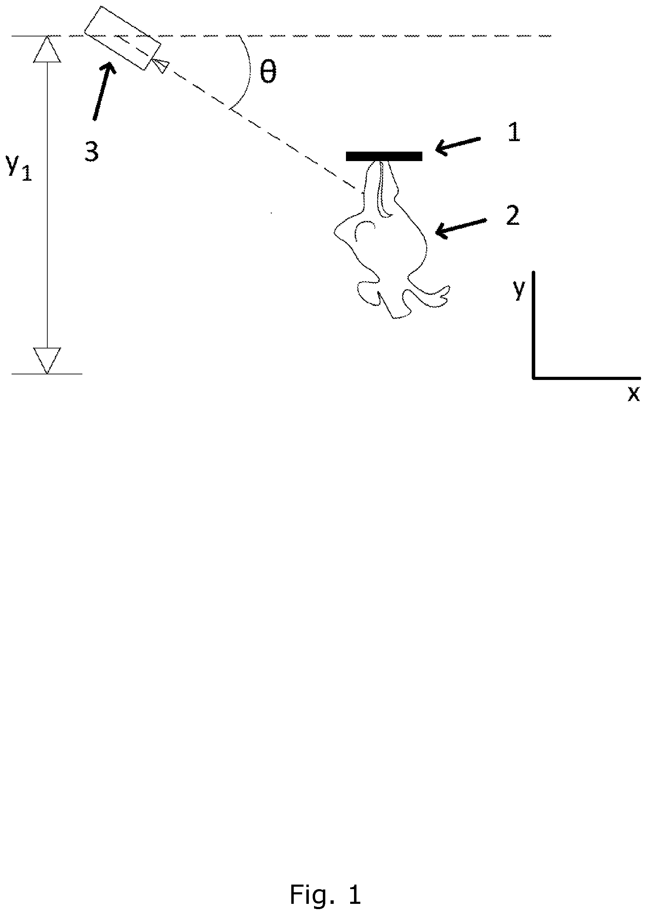

Reference is made to figure 1 that schematically illustrates a system for inspection of poultry. The system for inspection of poultry according to the present invention is in particular a system for inspection of poultry by detecting abnormalities close to the rump and groin area of the poultry. The system involves recording a digital image of the rump and groin area of the poultry in order to detect abnormalities close to the rump and groin area of the poultry.

In the context of the present invention, the term "abnormalities" means deviating from a standard poultry, unusual poultry and not normal poultry. Abnormalities of the poultry may, for example, be observed in poultry suffering from a disease or defect. The diseases may be ascites, eczema, dermatitis or inflamed skin. However, the abnormalities may also be from cuts, fractures and bleedings of the poultry. The abnormalities detected may also be non-disease abnormalities such as faecal contamination or bile contamination. If the chicken comprises remainings of faeces or bile after evisceration, the poultry should be identified and taken away for washing. Poultry with a disease should be identified and discarded. Abnormalities of the poultry may also be from organs, which have not been properly removed during evisceration or damages of the poultry during processing.

Some diseases in a poultry, such as ascites, are not easy to detect on the breast or back of the poultry. Characteristics of ascites is, for example, bulging in the lower part of the abdominal region. In addition, poultry with ascites is characterized by having blue colour in the groin area. Healthy poultry may also have a bulging in the abdominal region because of air in the abdomen. However, the healthy poultry will not have the blue colour in the groin area as the poultry suffering from ascites.

Poultry with eczema, dermatitis, or inflamed skin may in some case be detected by recording digital images of the breast of the poultry if the disease is located on the breast. However, in some cases, the inflamed skin, eczema, and dermatitis may, in particular, be located in the area close to the rump and groin area of the poultry.

It is a quality requirement that the poultry after the processing is free of certain diseases and defects. The system of the present invention may be used to detect abnormalities such as defects and diseases in the rump and groin area of the poultry, and the system may include a step of removing or discarding the poultry where abnormalities are recognised.

In an embodiment of the invention, the abnormalities detected by the system for inspection of slaughtered poultry carcasses are one or more selected from the list of ascites, inflamed skin, eczema, dermatitis, cuts, fractures, bleedings, scratches, discoloration, and contamination. The contamination may, for example, be bile contamination and/or faecal contamination.

As illustrated in figure 1, the system comprises means for conveying (1) the poultry (2) in a processing line (not shown).

The system also comprises one or more image-recording device(s) (3) configured to record at least one digital image of the rump and groin area of the poultry. In particular, the image-recording device(s) (3) is (are) placed in a position in relation to the poultry to record at least one digital image of the rump and groin area of the poultry. In figure 1 is shown one image-recording device (3), but in embodiments of the invention, the system may comprise more than one image-recording device.

In an embodiment of the invention, the one or more image-recording device(s) (3) is (are) positioned at one or more of the following positions:

> a) above the poultry (2) with an with an angle down to the poultry to record a digital image of the rump and groin area of the poultry (2),
> b) above the poultry (2) with an angle horizontal towards the poultry (2) to record a digital image of the rump and groin area of the poultry (2),
>
> > a) in same vertical height of the poultry (2) with an angle horizontal towards the poultry and where the poultry is angled towards the image-recording device to record a digital image of the rump and groin area of the poultry

The image-recording device (3) being placed in position a) is illustrated in figure 1. In figure 1, it is shown that the image-recording device (3) is positioned above the position of the poultry (2) on the conveyor (1). By the term "above the poultry" is meant that the image-recording device (3) in a vertical direction is placed higher than the body of the poultry (2). Furthermore, the image-recording device (3) is placed in a position angled down to the poultry. By the term "angle down" is in the context of the present invention meant that the image-recording device is placed in a position in relation to the horizontal line having an angle $\theta$ between 0-90 degrees, i.e. the image-recording device is facing the poultry (2). The angle $\theta$ of the image-recording device and the horizontal line may preferably be from 5 degrees to 90 degrees, such as 10 to 80 degrees, preferably 10-75 degrees, such as 15 to 70 degrees. However, the degree of the angle $\theta$ between the image-recording device and the horizontal line should not be limiting for the present invention, since the angle is dependent of, for example, i) the distance between the image-recording device and the poultry (x-plane) and ii) the vertical position of the image-recording device in relation to the poultry (y-plane).

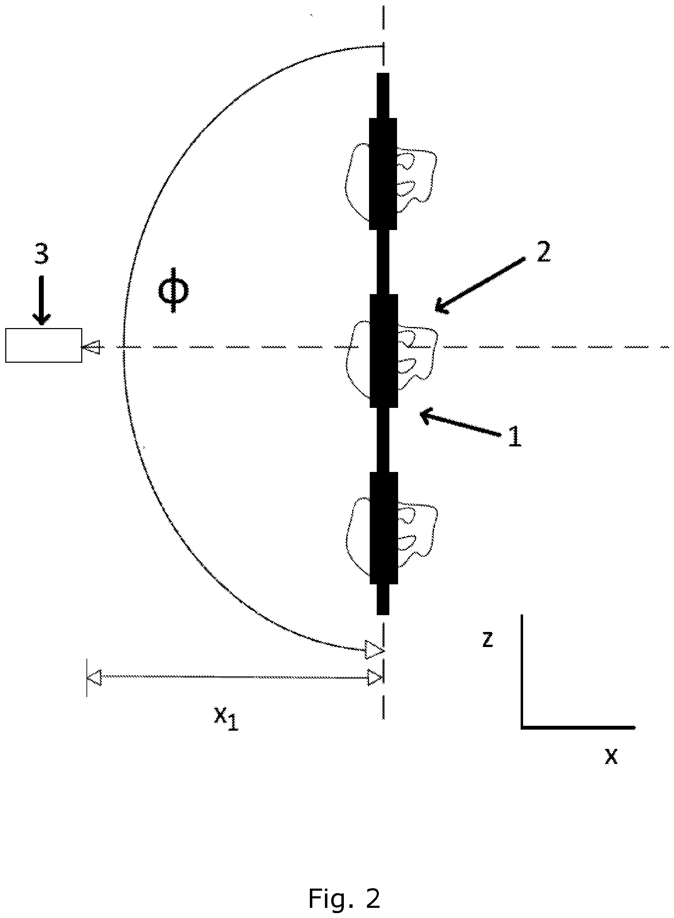

Figure 2 shows a top view of an embodiment of the invention where the image-recording device is placed in front of the body of the poultry. The angle $\Phi$ illustrates the position between the image-recording device (3) and the position of the body of the poultry in the direction of movement of the poultry on the conveyor (plane z as shown in figure 2). In figure 2, the body of the poultry (2) is placed in a position in front of the image-recording device (3), i.e. the angle $\Phi$ between the image-recording device (3) and the poultry in the direction of movement of the poultry (2) (plane z) is 90 degrees. However, figure 2 illustrates a non-limiting example and the angle $\Phi$ between the image-recording device and the poultry in the direction of movement of the poultry (2) may vary. The angle $\Phi$ is dependent on different parameters such as, for example, i) the distance between the image-recording device and the poultry (x-plane) and ii) the vertical position of the image-recording device in relation to the poultry (y-plane). Digital images may be recorded by the image-recording device before or after the body of the poultry is in front of the image-recording device. In a non-limiting embodiment, the angle $\Phi$ is in the range of 0 to 180 degrees, preferably from 5 to 175 degrees, more preferably from 10 to 170 degrees, such as 20 to 160 degrees.

In figure 2 is the image-recording device placed in a position in front of the body of the poultry.

However, the image-recording device may also be placed in a position at the back of the poultry and recording images of the rump and groin area from the backside of the poultry. The same applies as mentioned above regarding the angle $\Phi$ when the image-recording device is placed in a position at the backside of the poultry.

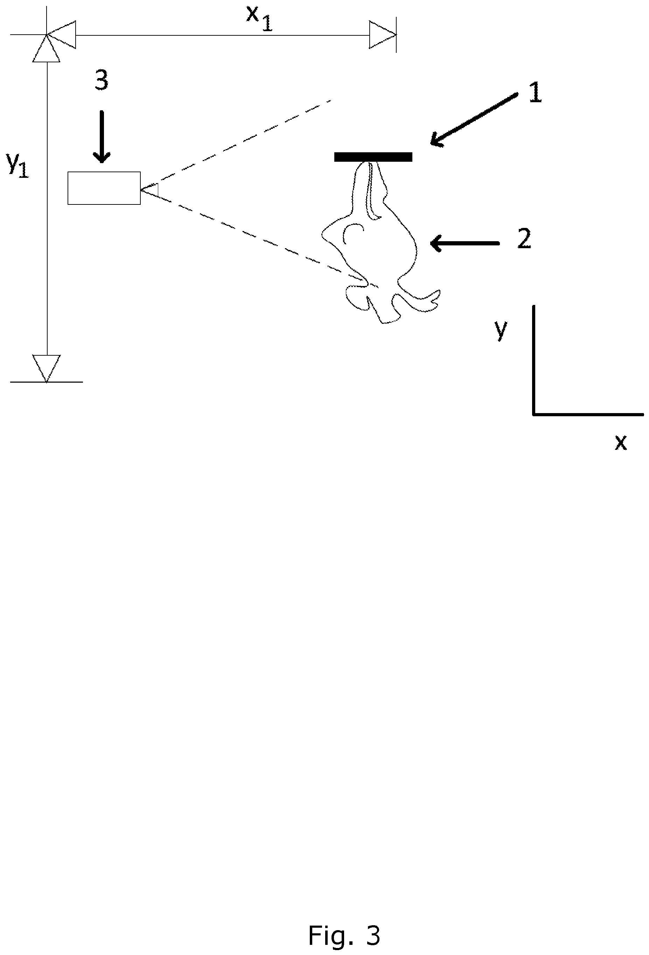

Figure 3 illustrates the embodiment of the system where the image-recording device (3) is placed in position b), i.e. the image-recording device (3) is placed in a position above the poultry (2) with an angle horizontal towards the poultry to record a digital image of the rump and groin area of the poultry (2). As for embodiment a) shown in figure 1, the term "above the poultry" in embodiment b) means that the image-recording device (3) is in a vertical direction is placed higher than the body of the poultry (2). However, in embodiment b), the image-recording device (3) is placed in an angle horizontal towards the poultry. By the term "an angle horizontal towards" is meant that the image-recording device (3) is facing towards the poultry (2) and is parallel with the horizontal line. Because the image-recording device (3) is placed above the poultry (2), and since the image-recording device (3) is recording with a certain width of the lens, digital images can be recorded of the rump and groin area of the poultry.

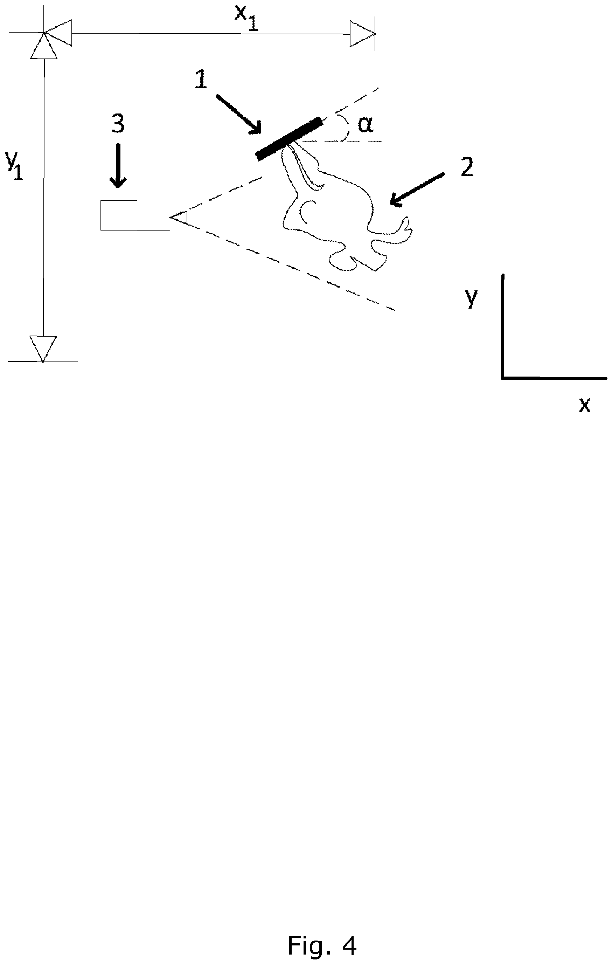

Figure 4 illustrates the embodiment of the system where the image-recording device 3 is placed in position c), i.e. the image-recording device (3) is placed in a position in same vertical height as the body of the poultry (2) with an angle horizontal towards the poultry (2) and where the rump and groin area of the poultry (2) is angled towards the image-recording device (3) to record a digital image of the rump and groin area of the poultry (2). By the term "in same vertical height" is meant that the image-recording device (3) and the poultry (2) is placed in the same vertical height, i.e. in a vertical direction, the image-recording device (3) and the body of the poultry (2) is placed facing each other. In embodiment c), the poultry (2) is angled towards the image-recording device (3). The term "angled towards" means that the means for conveying (1) the poultry (2) is tilted towards the image-recording device (3) with an angle $\alpha$. When the poultry (2) is placed in a position tilting towards the image-recording device (3), it is possible to record digital images of the rump and groin area of the poultry (2).

In a preferred embodiment of the invention, the image-recording device is placed as in embodiment a) and as shown in figure 1, i.e. the image-recording device (3) is placed in a position above the poultry (2) with an angle down to the poultry (2) to record a digital image of the rump and groin area of the poultry.

In a further embodiment of the invention, the image-recording device (3) is positioned to record a digital image of the rump and groin area of the poultry from the front side and/or the backside of the poultry. This means that the image-recording device may either be placed such that digital images are recorded of the rump and groins area of the poultry from the front side or from the backside of the poultry.

The term "image-recording device(s)" according to the present invention may be any monochrome imaging device and/or hyperspectral imaging device and/or multispectral imaging device.

Hyperspectral/multispectral imaging devices (3) include at least means for obtaining spectral images, such as, for example, an Electron-Multiplying Charge-Coupled-Device (EMCCD) imaging detector, and a lens assembly. In some embodiments of the invention, the image-recording device obtains a snapshot image, that is typically an image being obtained with a relatively short exposure time and the spectral imaging is based on such a snapshot. In other embodiments, the spectral imaging is based on a number of time-wise consecutive images. The result of the spectral imaging is a division of one or more images into different wavelength bands.

The type of image-recording device (3) used in embodiments of the system is typically a CCD (Charged Coupled Device), EMCCD (Electron-Multiplying CCD), CMOS (Complementary Metal-Oxide-Semiconductor), or other digital imager based digital camera such as a digital camera recording colour or monochrome images.

In an embodiment of the invention, the system comprises at least two image-recording devices. For example, one image-recording device is recording one or more digital images from the front side of the rump and groin area of the poultry and another image-recording device is recording one or more digital images of the backside of the rump and groin area of the poultry. Recording images of the rump and groin area of the poultry from both the front side and backside of the rump and groin area of the poultry can increase the certainty in detection of abnormalities.

In a further embodiment of the invention, the system comprises at least four image-recording devices. Having four image-recording devices, images can be recorded from two different positions from the front side and two different positions from the backside directed towards the rump and groin area of the poultry. This ensures an even more accurate detection of abnormalities.

In an embodiment of the invention, the system comprises one or more light source(s) (not shown in figures) to illuminate the poultry carcass. The light sources is optional, but improves the quality of the images recorded by the image-recording device.

The one or more light source(s) may in general be a light source emitting pulsed light or emit light continuously. The light source(s) may be LED based light sources, and in an embodiment, the light sources are configured to emit light at different wavelengths. The light source(s) may, for example, provide illumination spanning the spectrum of electromagnetic radiation including, ultraviolet light, infrared light and visible light.

In a preferred embodiment, the system includes more than one light source. The two or more light sources are configured to emit light at different or the same wavelength, such as ultraviolet light, infrared light, visible light. The same spectrum/spectra may be used if only one light source is used.

The system according to the present invention comprises means for conveying (1) the poultry (2), i.e. a conveyor. The conveyor may be a mechanical device or translator configured to move the poultry in a process line to pass the one or more image-recording device(s). The type and details of the conveyor is not important for the present invention. However, in an embodiment of the invention the conveyor may comprise hooks or hangers for carrying the poultry, which hooks and hangers are arranged on rails for movement of the hooks or hangers and thus also movement of the poultry. The poultry may be hanging in the hooks or hangers in the legs, such that the rump and groin area is facing upwards. The image-recording device(s) and the possible light source(s) is (are) in embodiments of the invention stationary relative to the movement of the poultry, so that the poultry passes an area where the image-recording device(s) and possible light sources are placed. In such cases, the system may further comprise a sensor, such as an inductive or optical sensor, which detects that a poultry is in the position in relation to the image-recording device(s) where the image-recording device(s) can record digital images of the rump and groin area of the poultry. In such case, the sensor instructs the image-recording device(s) and possible light source(s) to illuminate the poultry and record a digital image.

The term "image data" as used in the context of the present invention, is to be understood broadly, such as relating to spectral data, brightness, sharpness obtained in a digital image. Each data is typically assigned to a pixel position in the image or to a cluster of pixels, where a cluster typically comprises a plurality of neighbouring pixels.

"*Pixel"* as used herein is to be understood in a broad meaning including future equivalent(s) of pixel, e. g. including "voxel" for 3D.

The system according to the present invention also comprises an image data processor. This image data processor is configured to receive image data recorded by the one or more image-recording devices(s), and process the image data of the at least one digital image recorded of the rump and groin area of the poultry to detect abnormalities close to the rump and groin area of the poultry. The processing of the image data is in a preferred embodiment done by statistical and machine learning.

In a preferred embodiment, the statistical and machine learning is implemented by use of an Artificial Intelligence Engine (AIE), in an edge solution, such as, but not limited to, Microsoft Cognitive Toolkit (CNTK) or the like, cloud solution such as Azure Machine Learning or the like, or a combination of the two. In such and other embodiments, the AIE is initially trained based on a set of image data obtained from a pluralities of images obtained by capturing images of the rump and/or groin area of a pluralities of poultries for which is established that these poultries does not have abnormalities. The classification of no abnormalities is typically based on human and/or medical classification. Thus, the AIE is trained to recognise with a certain statistical accuracy a normality in an image. However, unsupervised learning can also be employed.

Written in a conceptual manner, the AIE takes as input image data (ID) in the form of

$$ID^*_{k\in[1;l]} = \begin{bmatrix} Value_{1,1} & \cdots & Value_{1,n} \\ \vdots & \ddots & \vdots \\ Value_{m,1} & \cdots & Value_{n,m} \end{bmatrix}.$$

Where index k refers to image number k and [1;1] refers to a total number of images as *l*. Superscript * refers to image data showing no abnormalities. $Value_{i,j}$ refers to the value obtained e.g. by the spectral imaging for pixel number $i,j$ (or a cluster of pixels referenced by $ij$). where $i\in$ (1-n) and $j\in$(1-m). It is noted that the index $i,j$ typically refers to a position of a pixel in an image and that each $Value_{i,j}$ may be a scalar or a vector in case more than a single value is obtained for each pixel (or cluster of pixels). The latter may e.g. be the case where the image data is spectralized into a number of spectral bands. Please observe that the symbolic writing is shown for 2 dimensions (in space), which may be extended to three or more dimensions if desired. Such other dimensions may be one or more of time, space.

By feeding a number of such *ID** into the AIE and training the AIE to recognise these data as representing no abnormalities, the AIE will be able to establish with a certain statistical accuracy whether an *ID* (no super- or subscript indicates that it has not yet been determined whether an abnormality is present):

$$ID = \begin{bmatrix} Value_{1,1} & \cdots & Value_{1,n} \\ \vdots & \ddots & \vdots \\ Value_{m,1} & \cdots & Value_{n,m} \end{bmatrix}$$

represents a normality. If it is determined that the considered *ID* statistically cannot be considered to represent a normality, is it determined that an abnormality is present.

While the above method focus on training the AIE based on image data showing no abnormalities, and determine an abnormality as image data not representing a normality, the opposite may be applied.

In this alternative approach, the AIE is trained to recognise image data representing abnormalities where the classification of an abnormality is based on e. g. a human classification and/or medical classification and/or unsupervised learning. When the AIE has been trained based on such image data, image data for which it has not yet been determined whether an abnormality is present is fed to the AIE. The AIE then determines from the image data that an abnormality is present if it is statistically recognised as an abnormality. And if not recognised as an abnormality, the AIE determines that no abnormality is present.

The invention can be implemented by means of hardware, software, firmware, or any combination of these. The invention or some of the features can also be implemented as software running on one or more data processors and/or digital signal processors.

The individual elements of an embodiment of the invention may be physically, functionally, and logically implemented in any suitable way such as in a single unit, in a plurality of units, or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1. A system for inspection of slaughtered poultry carcasses on a processing line, comprising:

    i) means for conveying (1) the poultry (2) through a processing line

    ii) one or more image-recording device(s) (3) configured for recording at least one digital image of the poultry (2) on the conveyor in the form of image data while being conveyed through the processing line, where the one or more image-recording device(s) (3) is (are) placed in a position to record at least one digital image of the rump and groin area of the poultry (2), and wherein the one or more image-recording device(s) (3) is (are) positioned at one of the following positions:

        a) above the position of the poultry (2) on the conveyor (1) and with an angle down to the poultry (2) such that the one or more image-recording device(s) is (are) facing the poultry (2) and wherein the one or more image-recording device(s) is (are) placed in a position in relation to the horizontal line having an angle between 10 to 80 degrees to record a digital image of the rump and groin area of the poultry (2)

        b) in the same vertical height as the body of the poultry (2) with an angle horizontal towards the poultry (2) and where the means for conveying the poultry (2) are tilted towards the image-recording device to face the rump and groin area of the poultry (2) towards the image-recording device (3) to record a digital image of the rump and groin area of the poultry (2)

    iii) an image data processor configured to

        - receive image data of the at least one digital image of the rump and groin area of the poultry (2)

        - process the image data of the at least one digital image of the rump and groin area to detect abnormalities close to the rump and groin area of the poultry (2).

2. The system according to claim 1, wherein the one or more image-recording device(s) is (are) a monochrome imaging device and/or hyperspectral imaging device and/or a multispectral imaging device.

3. The system according to any of the claims 1 to 2, wherein the image-recording device is a CCD, EMCCD, CMOS, or other digital imager based digital camera such as a digital camera recording colour or monochrome images.

4. The system according to any of claims 1 to 3, wherein the system comprises at least two image-recording devices.

5. The system according to any of the claims 1 to 4, wherein the system comprises one or more lights source(s) to illuminate to poultry carcass.

6. The system according to claim 5, wherein the one or more light sources(s) is (are) LED based light sources.

7. The system according to any of the claims 5 or 6, wherein the light source(s) is configurable to emit light at the different wavelengths.

8. The system according to any of the claims 5 to 7, wherein the light source(s) is illumination spanning of electromagnetic radiation including the spectrum of ultraviolet light, infrared light, and visible light.

9. The system according to any of the claims 1 to 8, wherein the means for conveying (1) the poultry (2), such as a mechanical device or translator, is configured to moving the poultry (2) to pass the at least one image-recording device (3).

10. The system according to any of the claims 1 to 9, wherein the means for conveying (1) the poultry (2) is means for hanging the poultry in the legs.

11. The system according to any of the claims 1 to 10, wherein the image data processor is configured to process the image data of the at least one digital image of the rump and groin area of the poultry to detect abnormalities close to the rump and groin area of the poultry, by statistical and machine learning.

12. The system according to any of the claims 1 to 11, wherein the abnormalities detected is one or more selected from the list of ascites, inflamed skin, eczema, dermatitis, cuts, fractures, bleedings, scratches, discoloration, and contamination.

13. A method of detecting abnormalities close to the rump and groin area of slaughtered poultry (2) carcasses on a processing line, the method comprises:

    i) conveying the poultry through a processing line by means for conveying (1)

    ii) recording at least one digital image of the poultry (2) while being conveyed through the processing line in the form of image data by one or more image-recording device(s) (3), where

- the at least one digital image is recorded of the rump and groin area of the poultry by the one or more image-recording device(s) (3) and wherein the one or more image-recording device(s) (3) is (are) positioned at one of the following positions:

a) above the position of the poultry (2) on the conveyor (1) and with an angle down to the poultry (2) such that the one or more image-recording device(s) is (are) facing the poultry (2) and wherein the one or more image-recording device(s) is (are) placed in a position in relation to the horizontal line having an angle between 10 to 80 degrees to record a digital image of the rump and groin area of the poultry (2)
b) in the same vertical height as the body of the poultry (2) with an angle horizontal towards the poultry (2) and where the means for conveying the poultry (2) are tilted towards the image-recording device to face the rump and groin area of the poultry (2) towards the image-recording device (3) to record a digital image of the rump and groin area of the poultry (2)

iii) process the image data of the at least one digital image of the rump and groin area to detect abnormalities close to the rump and groin area of the poultry.

## Patentansprüche

1. System zur Inspektion von geschlachteten Geflügelschlachtkörpern an einer Verarbeitungslinie, umfassend:

i) Mittel zum Befördern (1) des Geflügels (2) durch eine Verarbeitungslinie
ii) eine oder mehrere Bildaufzeichnungsvorrichtungen (3), die dazu konfiguriert sind, mindestens ein digitales Bild des Geflügels (2) an der Beförderungsvorrichtung in der Form von Bilddaten während der Beförderung durch die Verarbeitungslinie aufzuzeichnen, wobei die eine oder die mehreren Bildaufzeichnungsvorrichtungen (3) in eine Position gebracht werden, um mindestens ein digitales Bild des Rumpf- und Leistenbereichs des Geflügels (2) aufzuzeichnen, und wobei die eine oder die mehreren Bildaufzeichnungsvorrichtungen (3) an einer der folgenden Positionen positioniert sind:

a) oberhalb der Position des Geflügels (2) an der Beförderungsvorrichtung (1) und mit einem Winkel nach unten zu dem Geflügel (2), sodass die eine oder die mehreren Bildaufzeichnungsvorrichtungen dem Geflügel (2) zugewandt sind, und wobei die eine oder die mehreren Bildaufzeichnungsvorrichtungen in einer Position in Bezug auf die horizontale Linie angeordnet sind, die einen Winkel zwischen 10 und 80 Grad aufweist, um ein digitales Bild des Rumpf- und Leistenbereichs des Geflügels (2) aufzuzeichnen,
b) auf der gleichen vertikalen Höhe wie der Körper des Geflügels (2) mit einem horizontalen Winkel in Richtung des Geflügels (2) und wobei die Mittel zum Befördern des Geflügels (2) in Richtung der Bildaufzeichnungsvorrichtung geneigt sind, um den Rumpf- und Leistenbereich des Geflügels (2) in Richtung der Bildaufzeichnungsvorrichtung (3) zu zeigen, um ein digitales Bild des Rumpf- und Leistenbereichs des Geflügels (2) aufzuzeichnen,

iii) einen Bilddatenprozessor, der zu Folgendem konfiguriert ist:

- Bilddaten des mindestens einen digitalen Bildes des Rumpf- und Leistenbereichs des Geflügels (2) zu empfangen,
- die Bilddaten des mindestens einen digitalen Bildes des Rumpf- und Leistenbereichs zu verarbeiten, um Anomalien in der Nähe des Rumpf- und Leistenbereichs des Geflügels (2) zu erkennen.

2. System nach Anspruch 1, wobei die eine oder die mehreren Bildaufzeichnungsvorrichtungen eine monochrome Bildgebungsvorrichtung und/oder eine hyperspektrale Bildgebungsvorrichtung und/oder eine multispektrale Bildgebungsvorrichtung sind.

3. System nach einem der Ansprüche 1 bis 2, wobei die Bildaufzeichnungsvorrichtung eine CCD-, EMCCD-, CMOS- oder andere Digitalkamera ist, die auf einem digitalen Bildgeber basiert, wie etwa eine Digitalkamera, die Farb- oder Monochrombilder aufzeichnet.

4. System nach einem der Ansprüche 1 bis 3, wobei das System mindestens zwei Bildaufzeichnungsvorrichtungen umfasst.

5. System nach einem der Ansprüche 1 bis 4, wobei das System eine oder mehrere Lichtquellen umfasst, um Geflügelschlachtkörper zu beleuchten.

**6.** System nach Anspruch 5, wobei die eine oder die mehreren Lichtquellen LEDbasierte Lichtquellen sind.

**7.** System nach einem der Ansprüche 5 oder 6, wobei die Lichtquelle(n) dazu konfigurierbar ist/sind, Licht mit den verschiedenen Wellenlängen zu emittieren.

**8.** System nach einem der Ansprüche 5 bis 7, wobei die Lichtquelle(n) Beleuchtung ist/sind, die elektromagnetische Strahlung umfasst, einschließlich des Spektrums von ultraviolettem Licht, infrarotem Licht und sichtbarem Licht.

**9.** System nach einem der Ansprüche 1 bis 8, wobei die Mittel zum Befördern (1) des Geflügels (2), wie etwa eine mechanische Vorrichtung oder eine Umsetzvorrichtung, dazu konfiguriert sind, das Geflügel (2) zu bewegen, um die mindestens eine Bildaufzeichnungsvorrichtung (3) zu passieren.

**10.** System nach einem der Ansprüche 1 bis 9, wobei die Mittel zum Befördern (1) des Geflügels (2) Mittel zum Aufhängen des Geflügels an den Beinen sind.

**11.** System nach einem der Ansprüche 1 bis 10, wobei der Bilddatenprozessor dazu konfiguriert ist, die Bilddaten des mindestens einen digitalen Bildes des Rumpf- und Leistenbereichs des Geflügels zu verarbeiten, um Anomalien in der Nähe des Rumpf- und Leistenbereichs des Geflügels durch statistisches und maschinelles Lernen zu erkennen.

**12.** System nach einem der Ansprüche 1 bis 11, wobei die erkannten Anomalien eine oder mehrere sind, ausgewählt aus der Liste bestehend aus Aszites, entzündeter Haut, Ekzem, Dermatitis, Schnitten, Frakturen, Blutungen, Kratzern, Verfärbung und Kontaminationen.

**13.** Verfahren zum Erkennen von Anomalien in der Nähe des Rumpf- und Leistenbereichs von geschlachteten Schlachtkörpern von Geflügel (2) an einer Verarbeitungslinie, wobei das Verfahren Folgendes umfasst:

> i) Beförderung des Geflügels durch eine Verarbeitungslinie durch Mittel zum Befördern (1)
> ii) Aufzeichnen mindestens eines digitalen Bildes des Geflügels (2) während der Beförderung durch die Verarbeitungslinie in der Form von Bilddaten durch eine oder mehrere Bildaufzeichnungsvorrichtungen (3), wobei
>
> > - das mindestens eine digitale Bild des Rumpf- und Leistenbereichs des Geflügels durch die eine oder die mehreren Bildaufzeichnungsvorrichtungen (3) aufgezeichnet wird,
und wobei die eine oder die mehreren Bildaufzeichnungsvorrichtungen (3) an einer der folgenden Positionen positioniert sind:

> a) oberhalb der Position des Geflügels (2) an der Beförderungsvorrichtung (1) und mit einem Winkel nach unten zu dem Geflügel (2), sodass die eine oder die mehreren Bildaufzeichnungsvorrichtungen dem Geflügel (2) zugewandt sind, und wobei die eine oder die mehreren Bildaufzeichnungsvorrichtungen in einer Position in Bezug auf die horizontale Linie angeordnet sind, die einen Winkel zwischen 10 und 80 Grad aufweist, um ein digitales Bild des Rumpf- und Leistenbereichs des Geflügels (2) aufzuzeichnen,
> b) auf der gleichen vertikalen Höhe wie der Körper des Geflügels (2) mit einem horizontalen Winkel in Richtung des Geflügels (2) und wobei die Mittel zum Befördern des Geflügels (2) in Richtung der Bildaufzeichnungsvorrichtung geneigt sind, um den Rumpf- und Leistenbereich des Geflügels (2) in Richtung der Bildaufzeichnungsvorrichtung (3) zu zeigen, um ein digitales Bild des Rumpf- und Leistenbereichs des Geflügels (2) aufzuzeichnen,

iii) Verarbeiten der Bilddaten des mindestens einen digitalen Bildes des Rumpf- und Leistenbereichs, um Anomalien in der Nähe des Rumpf- und Leistenbereichs des Geflügels zu erkennen.

## Revendications

**1.** Système destiné à l'inspection de carcasses de volaille abattues sur une chaîne de transformation, comprenant :

> i) des moyens pour transporter (1) la volaille (2) à travers une chaîne de transformation
> ii) un ou plusieurs dispositif(s) d'enregistrement d'image (3) configuré(s) pour enregistrer au moins une image numérique de la volaille (2) sur le transporteur sous la forme de données d'image tout en étant transportée à travers la chaîne de transformation, où le ou les dispositif(s) d'enregistrement d'image (3) est (sont) placé(s) dans une position pour enregistrer au moins une image numérique de la zone de croupion et d'aine de la volaille (2), et ledit ou lesdits dispositif(s) d'enregistrement d'image (3) étant positionné(s) au niveau de l'une des positions suivantes :

> a) au-dessus de la position de la volaille (2) sur le transporteur (1) et avec un angle descendant vers la volaille (2) de sorte que le ou les dispositif(s) d'enregistrement d'image soit (soient) face à la volaille (2) et ledit ou lesdits dispositif(s) d'enregistrement d'image étant placé(s) dans une position par rapport à la ligne horizontale possédant un angle compris entre 10 et 80 degrés pour enregistrer une image numérique de la zone de croupion et d'aine de la volaille (2)
> b) à la même hauteur verticale que le corps de la volaille (2) avec un angle horizontal vers la volaille (2) et où les moyens pour transporter la volaille (2) sont inclinés vers le dispositif d'enregistrement d'image pour faire face à la zone de croupion et d'aine de la volaille (2) vers le dispositif d'enregistrement d'image (3) pour enregistrer une image numérique de la zone de croupion et d'aine de la volaille (2)

> iii) un processeur de données d'image configuré pour :

> > - recevoir des données d'image de la au moins une image numérique de la zone de croupion et d'aine de la volaille (2)
> > - traiter les données d'image de la au moins une image numérique de la zone de croupion et d'aine pour détecter des anomalies proches de la zone de croupion et d'aine de la volaille (2).

2. Système selon la revendication 1, ledit ou lesdits dispositif(s) d'enregistrement d'image étant un dispositif d'imagerie monochrome et/ou un dispositif d'imagerie hyperspectrale et/ou un dispositif d'imagerie multispectrale.

3. Système selon l'une quelconque des revendications 1 à 2, ledit dispositif d'enregistrement d'image étant un CCD, EMCCD, CMOS ou un autre appareil photo numérique basé sur un imageur numérique tel qu'un appareil photo numérique enregistrant des images couleur ou monochromes.

4. Système selon l'une quelconque des revendications 1 à 3, ledit système comprenant au moins deux dispositifs d'enregistrement d'image.

5. Système selon l'une quelconque des revendications 1 à 4, ledit système comprenant une ou plusieurs source(s) lumineuse(s) pour éclairer la carcasse de volaille.

6. Système selon la revendication 5, ladite ou lesdites source(s) lumineuse(s) étant des sources lumineuses à base de DEL.

7. Système selon l'une quelconque des revendications 5 ou 6, ladite ou lesdites source(s) lumineuse(s) étant configurables pour émettre de la lumière aux différentes longueurs d'onde.

8. Système selon l'une quelconque des revendications 5 à 7, ladite ou lesdites sources lumineuses étant un éclairage couvrant un rayonnement électromagnétique comprenant le spectre de la lumière ultraviolette, de la lumière infrarouge et de la lumière visible.

9. Système selon l'une quelconque des revendications 1 à 8, ledit moyen pour transporter (1) la volaille (2), tel qu'un dispositif mécanique ou un dispositif de translation, étant configuré pour déplacer la volaille (2) pour passer le au moins un dispositif d'enregistrement d'image (3).

10. Système selon l'une quelconque des revendications 1 à 9, ledit moyen pour transporter (1) la volaille (2) étant un moyen pour suspendre la volaille au niveau des pattes.

11. Système selon l'une quelconque des revendications 1 à 10, ledit processeur de données d'image étant configuré pour traiter les données d'image de la au moins une image numérique de la zone de croupion et d'aine de la volaille pour détecter des anomalies proches de la zone de croupion et d'aine de la volaille, par un apprentissage statistique et automatique.

12. Système selon l'une quelconque des revendications 1 à 11, lesdites anomalies détectées étant une ou plusieurs choisies dans la liste d'ascite, de peau inflammée, d'eczéma, de dermatite, de coupures, de fractures, de saignements, d'égratignures, de décoloration et de contamination.

13. Procédé de détection d'anomalies à proximité de la zone de croupion et d'aine de carcasses de volailles abattues (2) sur une chaîne de transformation, le procédé comprenant :

> i) le transport de la volaille à travers une chaîne de transformation par un moyen pour transporter (1)
> ii) l'enregistrement d'au moins une image numérique de la volaille (2) pendant qu'elle est transportée à travers la chaîne de transformation sous la forme de données d'image par un ou plusieurs dispositif(s) d'enregistrement d'image (3), où

- la au moins une image numérique de la zone de croupion et d'aine de la volaille est enregistrée par le ou les dispositif(s) d'enregistrement d'image (3)

et ledit ou lesdits dispositif(s) d'enregistrement d'image (3) étant positionné(s) au niveau de l'une des positions suivantes :

a) au-dessus de la position de la volaille (2) sur le transporteur (1) et avec un angle descendant vers la volaille (2) de sorte que le ou les dispositif(s) d'enregistrement d'image soit (soient) face à la volaille (2) et ledit ou lesdits dispositif(s) d'enregistrement d'image étant placé(s) dans une position par rapport à la ligne horizontale possédant un angle compris entre 10 et 80 degrés pour enregistrer une image numérique de la zone de croupion et d'aine de la volaille (2)

b) à la même hauteur verticale que le corps de la volaille (2) avec un angle horizontal vers la volaille (2) et où les moyens pour transporter la volaille (2) sont inclinés vers le dispositif d'enregistrement d'image pour faire face à la zone de croupion et d'aine de la volaille (2) vers le dispositif d'enregistrement d'image (3) pour enregistrer une image numérique de la zone de croupion et d'aine de la volaille (2)

iii) traiter les données d'image de la au moins une image numérique de la zone de croupion et d'aine pour détecter des anomalies proches de la zone de croupion et d'aine de la volaille.

Fig. 1

Fig. 2

Fig. 3

Fig. 4

**EP 3 855 926 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6587575 B1
- US 2007111648 A1
- US 2009087033 A1
- US 2016069743 A1